# EUROPÄISCHE PATENTSCHRIFT

(11) **EP 1 640 389 B1**
(45) Veröffentlichungstag und Bekanntmachung des Hinweises auf die Patenterteilung: **07.02.2007**
(21) Anmeldenummer: 05018752.5
(22) Anmeldetag: 30.08.2005
(51) Int. Cl.: C08F 222/06, C08F 220/68, C08F 290/06

(54) **Copolymerisate, deren Herstellung und Verwendung als Netz- und Dispergiermittel**
Copolymers, their process and use as dipersant or wetting agent
Copolymères, leur procédé de fabrication et leur usage comme agent mouillant ou dispersant

(30) Priorität: 14.09.2004 DE 102004044879
(43) Veröffentlichungstag der Anmeldung: 29.03.2006
(73) Patentinhaber: Byk-Chemie GmbH, 46483 Wesel (DE)
(72) Erfinder: Pritschins, Wolfgang, Dr., 46487 Wesel (DE); Haubennestel, Karlheinz, 46487 Wesel (DE); Tiegs, Werner, 46459 Rees (DE)
(74) Vertreter: Leifert & Steffan

(56) Entgegenhaltungen:
- EP-A- 1 142 972
- EP-A- 1 176 158
- WO-A-91/06586
- DE-A1- 10 142 991

## Beschreibung

Die vorliegende Erfindung betrifft Copolymerisate auf Basis von Dicarbonsäuren bzw. deren Derivaten, ungesättigten Monocarbonsäuren und Allylpolyetherderivaten. Des weiteren betrifft die Erfindung ein Verfahren zur Herstellung dieser Copolymerisate und deren Vorstufen, sowie die Verwendung der Copolymerisate, insbesondere als Netz- und Dispergiermittel.

Insbesondere bei der Herstellung pigmentierter oder Füllstoffe enthaltender Überzugsmittel ist eine gleichmäßige und feine Verteilung von Feststoffteilchen im Überzugsmittelsystem wichtig. Verläuft die Einarbeitung der Feststoffteilchen nicht optimal, kann dies zu Flokkulation, Glanzverlust, Farbtonveränderungen, Sedimentation und einer Beeinträchtigung der Verlaufeigenschaften führen. Netz- und Dispergiermittel ermöglichen erst die gleichmäßige Einarbeitung von Feststoffteilchen in derartige Systeme.

In zunehmendem Maße steigt die Nachfrage an lösemittelfreien Überzugsmittel, die neben lösemittelhaltigen Systemen für verschiedenste Beschichtungsarbeiten, wie beispielsweise Lackierarbeiten einsetzbar sind. Aufgrund der Vielfalt möglicher Systeme steigt auch der Bedarf an maßgeschneiderten Netz- und Dispergiermitteln, die für spezielle Zwecke und Anwendungsbereiche einsetzbar sind.

EP 1 142 972 A2 beschreibt die Verwendung von Copolymerisaten aus ungesättigten Dicarbonsäuren und vinylfunktionalisierten Polyethern zur Herstellung wäßriger Pigmentpräparationen. Aufgrund der begrenzten Verfügbarkeit unterschiedlicher Oxyalkylenglykol- oder Polyalkylenoxid-Vinylether bestehen jedoch nur beschränkte Möglichkeiten auf bestimmte Systeme zugeschnittene Copolymerisate zur Verfügung zu stellen.

Aus EP 0 542 033 A2 ist die Verwendung von Pigmentzubereitungen bekannt, die neben dem Pigment und üblichen Hilfsmitteln ein Copolymer enthalten, das aus einer monoethylenisch ungesättigten Dicarbonsäure oder deren Anhydrid sowie Monoolefinen und/oder Alkylvinylethern erhalten wird. Die Verwendung von Olefinen führt jedoch in vielen Fällen zu Störungen der Netz- und Dispergierwirkung der Produkte. Darüber hinaus liegt in Copolymerisaten, in die Kohlenwasserstoffe einpolymerisiert werden üblicherweise einen Restmonomerengehalt an Kohlenwasserstoffen vor, der neben Geruchsproblemen, bei Verwendung in wäßrigen Systemen Trübungen verursacht.

Auch die GB 1,093,081 offenbart die Verwendung von Copolymerisaten aus Maleinsäurederivaten und Olefinen in Dispersionen feiner Partikel. Aufgrund der Verwendung von Olefinen, besitzen diese Copolymerisate jedoch ebenfalls die oben genannten Nachteile.

In DE 195 08 655 A1 wird der Einsatz von Copolymeren aus monoethylenisch ungesättigten Dicarbonsäuren oder deren Anhydriden mit verzweigten OlefinOligomeren beschrieben. Fakultativ können in das Polymer auch Allylalkylether oder monoethylenisch ungesättigte, kurzkettige, d.h. C₃- bis C₁₀-Monocarbonsäuren einpolymerisiert werden.

US 5,585,427 offenbart die Copolymerisation Polyether modifizierter Dicarbonsäurederivate mit diversen Vinylverbindungen zu Copolymerisaten mit einer Säurezahl kleiner 1. Nachteilig wirkt sich aus, daß die gebildeten Polyetherester in wäßrigem Medium nicht langzeitstabil sind.

DE 42 14 011 C1 beschreibt Copolymerisate aus zwei Komponenten, insbesondere zu Behandlung von Leder und Pelzfellen, die durch Polymerisation aus einem ethylenisch ungesättigten Dicarbonsäureanhydrid, -ester und/oder -amid, und einer ungesättigten Verbindung, die eine end- oder exoständige Doppelbindung aufweist, erhalten werden.

Aus der EP 0 831 104 A2 sind Terpolymere aus einem ungesättigten sauren Reaktanten, wie beispielsweise Maleinsäure, einem 1-Olefin und einem 1,1- disubstituierten Olefin bekannt. Diese Terpolymere sind aus den oben genannten Gründen nachteilig und werden als Dispergiermittel in Schmierölen und Absetzungsinhibitoren in Kohlenwasserstofftreibstoffen eingesetzt.

Eine der Aufgaben der vorliegenden Erfindung war es, gegenüber dem Stand der Technik verbesserte Copolymerisate sowie deren Vorstufen zur Verfügung zu stellen. Die Copolymerisate sollen insbesondere als Netz- und Dispergiermittel geeignet sein und die Nachteile der Copolymere des Stands der Technik vermeiden. Die Vorstufen der erfindungsgemäßen Copolymere sollen überdies eine möglichst maßgeschneiderte Umsetzung für breite Anwendungsbereiche über die des Lack- und Beschichtungsbereichs hinaus ermöglichen. Die aus den Vorstufen resultierenden Produkte sollen daher je nach gewählter weiterer Umsetzung in lösemittelhaltigen, wasserhaltigen und/oder lösemittelfreien Systemen wie beispielsweise Lacken, Druckfarben, Pigmentkonzentraten und/oder Kunststoffmassen einsetzbar sein.

Diese Aufgabe konnte durch Bereitstellung von Copolymerisaten gelöst werden, die erhältlich sind durch Copolymerisation der ungesättigten Bindungen von
(a) 1 bis 80 mol-% mindestens eines ethylenisch ungesättigten 1,2-Dicarbonsäurederivats,
(b) 2 bis 80 mol-% mindestens eines ungesättigten Monocarbonsäurederivats mit 12 bis 30 Kohlenstoffatomen,
(c) 1 bis 90 mol-% mindestens eines Polyalkylenoxyallylethers mit einem zahlenmittleren Molekulargewicht von bis zu 5000 g/mol und
(d) 0 bis 30 mol-% weitere, von (a), (b) und (c) verschiedene, ungesättigte Monomere;
sowie Umsetzungsprodukte der Copolymerisate mit Ammoniak, Aminen, Wasser, Alkoholen, Aminoalkoholen und/oder Alkali- oder Erdalkalihydroxiden.

### Monomere (a)

Monomere (a) sind ethylenisch ungesättigte 1,2-Dicarbonsäureverbindungen, insbesondere 1,2-Dicarbonsäureanhydride mit 4 bis 8 Kohlenstoffatomen, vorzugsweise Maleinsäureanhydrid.

Alternativ oder in Kombination hierzu können als Monomere (a), die Halbester oder Diester der 1,2-Dicarbonsäureverbindungen, wie beispielsweise der Maleinsäure, Fumarsäure, Itaconsäure, Mesaconsäure und Citraconsäure eingesetzt werden. Die Alkohole solcher Ester sind geradkettig oder verzweigt und enthalten 1 bis 30 Kohlenstoffatome und gegebenenfalls cycloaliphatische, aromatische und/oder araliphatische Gruppen. Als Alkohole kommen auch C₁-C₄-Alkylenoxid-Addukte der genannten Alkohole wie zum Beispiel 2-Butoxyethanol, Diethylenglykolmonobutylether, Triethylenglykolmonobutylether, Propylenglykolmonomethylether, 2-Phenoxyethanol oder 2-(2-Phenoxyethoxy)ethanol in Betracht.

Ferner können als Monomere (a) beispielsweise Monobutylmaleinat, Dibutylmaleinat, Monooctadecylmaleinat, Monooctadecyl-3 EO-maleinat, Dimethylmaleinat, Di-2-Ethylhexylmaleinat, Di-2-Ethylhexylfumarat, Diisotridecylmaleinat und Dioctadecenylfumarat genannt werden.

Weiter sind zu den Monomeren (a) Monoamide, Diamide und Imide der monomeren 1,2-Dicarbonsäurederivate zu zählen, wiederum einschließlich der Maleinsäure, Fumarsäure, Itaconsäure, Mesaconsäure und Citraconsäure. Diese Verbindungen basieren auf primären und/oder sekundären Aminen oder Aminoalkoholen mit 1 bis 20 Kohlenstoffatomen sowie Ammoniak. Beispielsweise seien Maleinsäurecyclohexylamid, Maleinsäureoctadecenylamid, Maleinsäuredibutylamid, Maleinsäurebenzylamid und Maleinsäurediisotridecylamid genannt.

Die Monomeren (a) können einzeln oder in Mischung von zwei oder mehreren Monomeren (a) eingesetzt werden und liegen mit Anteilen von 1 bis 80, vorzugsweise 5 bis 75, noch bevorzugter 20 bis 70 und ganz besonders bevorzugt 40 bis 65 mol-%in der Monomermischung vor. Liegt der Anteil an Monomerem (a) niedriger als 1 mol-%, so ist die Adsorption an die zu dispergierenden Feststoffe zu schwach, liegt er höher als 80 mol-%, so wird die für eine sterische Stabilisierung erforderliche Ausdehnung der Adsorptionsschicht nicht erreicht.

Sollen die Copolymerisate als Netz- und Dispergiermittel in wäßrigen Systemen eingesetzt werden, so empfiehlt es sich die Monomere (a) in einem Anteil von 20 bis 80 mol-% bezogen auf die Summe der Monomere (a), (b), (c) und (d) einzusetzen, insbesondere in einem Anteil von 40 bis 70 mol-%. Liegt der Anteil an Monomeren (a) in einem für wäßrige System konzipierten Copolymerisat niedriger als 20 mol-%, so ist in die Wasserlöslichkeit in dem meisten Fällen nicht ausreichend.

Für den Einsatz in nicht-wäßrigen Systemen und/oder Formassen empfiehlt es sich die Monomere (a) in einem Anteil von 1 bis 70 mol-%, bezogen auf die Summe der Monomere (a), (b), (c) und (d) einzusetzen, insbesondere in einem Anteil von 5 bis 65 mol-%. Liegt der Anteil an Monomeren (a) in diesem Fall höher als 70 mol-%, so ist häufig keine ausreichende Verträglichkeit gegeben, insbesondere bei sehr unpolaren Lacksystemen bzw. Formmassen.

### Monomere (b)

Das Monomer (b) ist ein ungesättigtes Monocarbonsäurederivat mit 12 bis 30 Kohlenstoffatomen, umfassend synthetische und natürlich vorkommende Monocarbonsäuren und deren Derivate mit 12 bis 30 Kohlenstoffatomen. Insbesondere geeignet sind ein oder mehrere Kohlenstoff-KohlenstoffDoppelbindungen enthaltende Monocarbonsäuren mit 12 bis 30 Kohlenstoffatomen, die aus natürlichen Quellen erhalten werden können, wie beispielsweise Palmitölsäure (beispielsweise aus Meerestieren oder Samenölen), Ölsäure (beispielsweise aus Palmöl), Elaidinsäure, *cis*-Vaccensäure, Linolsäure (beispielsweise aus Pflanzenölen), α- und γ-Linolensäure (beispielsweise aus Pflanzenölen), Elaeostearinsäure (beispielsweise aus Pflanzenölen), Di-*homo*-γ-Linolensäure, Arachidonsäure (aus Leber und tierischen Fette), Erucasäure und Nervonsäure. Diese Fettsäuren können beispielsweise auch in Form ihrer Mischungen eingesetzt werden. Es bietet sich insbesondere auch der Einsatz natürlicher Produkte an, welche bereits aus Mischungen dieser Fettsäuren bestehen oder Mischungen dieser Fettsäuren enthalten. So kann beispielsweise die an Linolsäure und Ölsäure reiche konjugierte Sonnenblumenölfettsäure oder die an Linolsäure reiche Tallölfettsäure eingesetzt werden. Diese Naturprodukte sind in der Regel kostengünstig kommerziell erhältlich und stehen in ausreichender Reinheit zur Verfügung. Der teilweise enthaltene Anteil gesättigter Fettsäuren in derartigen Naturprodukten sollte möglichst gering sein, vorzugsweise unter 20 Gew.-%, bevorzugter unter 10 Gew.-% und noch bevorzugter unter 5 Gew.-% bezogen auf das Gesamtgewicht der Monomere (b) liegen. Vorzugsweise werden geradkettige Monocarbonsäuren verwendet, deren der Polymerisation zugängliche Doppelbindung nicht endständig oder exoständig liegt, sonder in der Mitte oder nahe der Mitte des Moleküls, so daß beim Einpolymerisieren die beidseitig der Doppelbindung liegenden Molekülenden Seitenarme des Rückgrats des Copolymerisats bilden. Die als Monomer (b) einzusetzenden ungesättigten Monocarbonsäuren können auch ganz oder teilweise mit den unter Monomer (a) als Veresterungskomponente beschriebenen Alkoholen verestert oder den unter Monomer (a) als Amidierungskomponente beschriebenen Aminen amidiert sein.

Unter anderem durch den Einsatz ungesättigter Monocarbonsäurederivate als Monomer (b) konnten die Nachteile des Einsatzes von Olefinen in konventionellen Dispergiermitteln des Stands der Technik vermieden werden. Zum einen verleihen die Carboxylgruppen den Polymeren eine zusätzliche Polarität, die bei der Dispergierung in wäßrigen oder polaren Systemen hilfreich ist, zum anderen stört ein gegebenenfalls nach der Polymerisation noch enthaltener Restmonomerengehalt in wäßrigen oder polaren Systemen weitaus weniger, als dies beim Einsatz von Olefinen der Fall ist. Die Carboxylgruppe hat sich darüber hinaus als geeigneter Adsorptionsvermittler an Pigmentoberflächen herausgestellt.

Die Monomeren (b) können einzeln oder in Mischung von zwei oder mehreren Monomeren (b) eingesetzt werden und liegen im Copolymerisat bei Anteilen von 2 bis 80 mol-%, vorzugsweise 5 bis 60, noch bevorzugter 10 bis 40 vor.

Sollen die Copolymerisate als Netz- und Dispergiermittel in wäßrigen Systemen eingesetzt werden, so empfiehlt es sich die Monomere (b) in einem Anteil von 5 bis 60 mol-%, bezogen auf die Summe der Monomere (a), (b), (c) und (d) einzusetzen. Insbesondere in einem Anteil von 5 bis 40 mol-%. Insbesondere empfiehlt sich auch der Einsatz von ungesättigten Monocarbonsäuren mit 12 bis 18 Kohlenstoffatomen.

Für den Einsatz in nicht-wäßrigen Systemen und /oder Formassen empfiehlt es sich die Monomere (b) in einem Anteil von 5 bis 80 mol-% bezogen auf die Summe der Monomere (a), (b), (c) und (d) einzusetzen, insbesondere in einem Anteil von 10 bis 60 mol-%. Insbesondere empfiehlt sich auch der Einsatz von ungesättigten Monocarbonsäuren mit 16 bis 30 Kohlenstoffatomen.

### Monomere (c)

Monomer (c) ist ein Polyalkylenoxyallylether (Allylpolyetherderivat), mit vorzugsweise folgender allgemeiner Formel:

CH₂=CH-CH₂-O-[AO]ₚ-R¹

wobei AO für eine Alkylenoxy-Einheit mit 2 bis 10 Kohlenstoffatomen steht, R¹ für Wasserstoff, einen Alkylrest mit 1 bis 6 Kohlenstoffatomen oder einen Rest CO-R² steht, wobei R² ein Alkylrest mit 1 bis 6 Kohlenstoffatomen ist, und p so gewählt ist, daß das zahlenmittlere Molekulargewicht Mₙ des Allylpolyetherderivats bis zu 5000 g/mol beträgt.

Vorzugsweise enthält das Monomer (c) jedoch keine freien Hydroxygruppen, da diese beim Einsatz von Carbonsäureanhydriden als Monomer (a) zu einer gegebenenfalls während des Polymerisationsprozesses unerwünschten Ringöffnung des Anhydridrings führen können.

AO kann innerhalb des Moleküls für gleiche oder verschiedene Alkylenoxyeinheiten mit jeweils 2 bis 10 Kohlenstoffatomen stehen.

Vorzugsweise steht AO für eine Ethylenoxy(=EO)- oder Propylenoxy(=PO)-Einheit. Durch die chemische Zusammensetzung und das Molekulargewicht des Polyetheranteils im Allylpolyetherderivat läßt sich die Wasserlöslichkeit beziehungweise Polarität des Copolymerisats steuern. So steigt beispielsweise in EO- und PO-haltigen Allylpolyethern mit dem EO-Anteil auch die Hydrophilie des Copolymerisats und somit dessen Eignung für wäßrige Systeme.

EO/PO-Allylpolyetherderivate lassen sich durch folgende allgemeine Formel wiedergeben:

CH₂=CH-CH₂-O-[EO]ₘ[PO]ₙ-R¹,

wobei R¹ wie oben definiert ist und die Summe aus m und n obigem p entspricht, das heißt, daß m und n so gewählt werden, daß das zahlenmittlere Molekulargewicht Mₙ des Allylpolyetherderivats bis zu 5000 g/mol beträgt.

Liegt das Mₙ des Monomers (c) über 5000 g/mol, dann ist das Molekulargewicht des damit erhaltenen Copolymeren zu hoch, um noch eine ausreichende Löslichkeit und breite Verträglichkeit aufzuweisen.

Vorzugsweise liegt das zahlenmittlere Molekulargewicht Mₙ des Allylpolyetherderivats nicht niedriger als 200 .

Vorzugsweise reicht das Molekulargewicht des Monomeren (c) von etwa 300 bis 3000 g/mol, bevorzugter 400 bis 2000 g/mol.

Vorzugsweise werden folgende Allylpolyetherderivate eingesetzt: Polyoxyethylenallylmethylether, Polyoxypropylenmonoallylmethylether, Polyoxypropylenmonoallylethermonoacetat, Polyoxyethylenpolyoxypropylenallylmethylether Diese sind beispielsweise von der NOF Corporation unter den Handelsnamen Uniox PKA®, Unisafe PKA® und Unicelin PKA® erhältlich. Bei Verwendung von Allylpolyethern mit unterschiedlichen Alkylenoxyeinheiten, zum Beispiel der allgemeinen Formel CH₂=CH-CH₂-O-[EO]ₘ[PO]ₙ-R¹ können die unterschiedlichen Alkylenoxyeinheiten (hier: [EO] und [PO]) in der Polyalkylenoxygruppe-beispielsweise statistisch verteilt sein oder beispielsweise in Gradienten- oder Blockstruktur vorliegen.

Diese Allylpolyether können in an sich bekannter Weise aus Allylalkohol und Oxiranen wie insbesondere Ethylenoxid, Propylenoxid und/oder Butylenoxid hergestellt werden. Die Steuerung der zuvor genannten Indizes m und n erfolgt durch die Auswahl entsprechender molarer Verhältnisse. Desweiteren kann man in an sich bekannter Weise durch die gewählte Reihenfolge der Oxirane verschiedene Blockpolyalkylenoxid-Reste oder statistisch verteilte Polyalkylenoxid-Reste erzeugen.

Die Monomeren (c) können einzeln oder in Mischung von zwei oder mehreren Monomeren (c) eingesetzt werden und liegen im Copolymerisat mit Anteilen von 1 bis 90 mol-%, vorzugsweise 5 bis 60, noch bevorzugter 10 bis 40 vor. Liegt der Anteil an Monomerem (c) niedriger als 1 mol-%, so läßt sich keine ausreichende Adsorptionsschicht auf der Oberfläche der zu dispergierenden Teilchen aufbauen, liegt er höher als 90 mol-%, so ist die Affinität zur Teilchenoberfläche zu gering.

Insbesondere der Einsatz einer Mischung zweier verschiedener Monomere (c), eines mit einer eher hydrophoben Alkylenoxykette und eines mit einer eher hydrophilen Alkylenoxykette, hat sich als vorteilhaft erwiesen. Copolymere, die eine derartige Mischung von zwei oder mehr Monomeren (c) enthalten sind besonders vielseitig einsetzbar und können als universelle Netz- und Dispergiermittel verwendet werden.

Sollen die Copolymerisate als Netz- und Dispergiermittel in wäßrigen Systemen eingesetzt werden, so empfiehlt es sich die Monomere (c) in einem Anteil von 5 bis 50 mol-% bezogen auf die Summe der Monomere (a), (b), (c) und (d) einzusetzen. Insbesondere in einem Anteil von 15 bis 45 mol-%. Liegt der Anteil an Monomeren (c) in einem für ein wäßriges System geplanten Copolymerisat niedriger als 5 mol-%, so verschlechtert sich die Wasserlöslichkeit. Darüber hinaus ist es vorteilhaft, wenn insbesondere besonders hydrophile Alkylenoxygruppen, wie beispielsweise EO enthalten sind.

Für den Einsatz in nicht-wäßrigen Systemen und Formmassen empfiehlt es sich die Monomere (c) in einem Anteil von 5 bis 65 mol-% bezogen auf die Summe der Monomere (a), (b), (c) und (d) einzusetzen. Insbesondere in einem Anteil von 10 bis 50 mol-%. Darüber hinaus ist es vorteilhaft, wenn insbesondere Alkylenoxygruppen mit weniger ausgeprägt hydrophilen Eigenschaften, wie beispielsweise PO enthalten sind.

### Monomere (d)

Als Monomere (d) können Acrylsäureester und/ oder Methacrylsäureester wie z. B. Methyl(meth)acrylat, Ethyl(meth)acrylat, Propyl(meth)acrylat, Butyl(meth)acrylat, Hexyl(meth)acrylat, 2-Ethylhexyl(meth)acrylat, Stearyl(meth)acrylat, Lauryl(meth)-acrylat, Cyclohexyl(meth)acrylat, Benzyl(meth)acrylat, Trifluormethyl(meth)acrylat, Hexafluorpropyl(meth)acrylat, Tetrafluorpropyl(meth)acrylat, Polypropylenglykolmono(meth)acrylate, Polyethylenglykolmono(meth)acrylate; Styrol, α-Methylstyrol, Vinyltoluol, Vinylcyclohexan; Vinyl- oder Allylester aliphatischer oder aromatischer Carbonsäuren, wie z. B. Vinylacetat, Vinylpropionat, Vinylbutanat, Vinylhexanoat, Vinyloctanoat, Vinyldecanoat, Vinylstearat, Vinylpalmitat, Vinylcrotonat, Divinyladipat, Divinylsebacat, Vinyl-2-ethylhexanoat, Vinyltrifluoracetat; Allylacetat, Allylpropionat, Allylbutanat, Allylhexanoat, Allyloctanoat, Allyldecanoat, Allylstearat, Allylpalmitat, Allylsalicylat, Allyllactat, Diallyloxalat, Allylstearat, Allylsuccinat, Diallylglutarat, Diallyladipat, Diallylpimelat, Diallylmaleat, Diallylphthalat, Diallylisophthalat; Alkylvinylether wie zum Beispiel Vinylethylether und/ oder Vinylpolyether verwendet werden. Diese Monomeren sind für die dispergierende Wirkung nicht von ausschlaggebender Bedeutung, sondern dienen im Wesentlichen zur Feinanpassung der Copolymereigenschaften bei Bedarf, insbesondere der Verträglichkeiten, an die Erfordernisse der verschiedenen Einsatzgebiete.

Die Monomeren (d) können einzeln oder in Mischung von zwei oder mehreren Monomeren (d) eingesetzt werden und liegen im Copolymerisat mit Anteilen von 0 bis 30 mol-%, vorzugsweise 0 bis 15 mol-%, besonders bevorzugt 0 bis 5 mol-% und noch bevorzugter 0 mol-% vor.

Sollen die Copolymerisate als Netz- und Dispergiermittel in wäßrigen Systemen eingesetzt werden, so empfiehlt es sich die Monomere (d) in einem Anteil von 0 bis 20 mol-% bezogen auf die Summe der Monomere (a), (b), (c) und (d) einzusetzen. Insbesondere in einem Anteil von 0 bis 5 mol-%.

Für den Einsatz in nicht-wäßrigen Systemen und Formmassen empfiehlt es sich die Monomere (d) in einem Anteil von 0 bis 25 mol-% bezogen auf die Summe der Monomere (a), (b), (c) und (d) einzusetzen. Insbesondere in einem Anteil von 0 bis 10 mol-%.

### Herstellung der erfindungsgemäßen Copolymere und deren Vorstufen

Die erfindungsgemäßen Copolymerisate können nach allen bekannten üblichen Polymerisationsverfahren hergestellt werden, z.B. durch Emulsions-, Suspensions-, Fällungs-, Lösungspolymerisation und Substanzpolymerisation. Bevorzugt sind radikalische Lösungspolymerisation und Substanzpolymerisation.

Zur Polymerisation werden vorteilhaft die Monomeren ganz oder teilweise vorgelegt und Radikalstarter im Verlauf der Polymerisation zudosiert. Die Polymerisation wird in üblichen Reaktoren, eventuell druckdicht, mit Rührer, Zulaufgefäßen bzw. Dosiervorrichtungen durchgeführt.

Besonders vorteilhaft ist es die Monomeren (b) und/oder (c) vorzulegen und diesen das Monomer (a) langsam zu zuführen. Diese Vorgehensweise empfiehlt sich insbesondere, wenn als Monomer (a) schlecht lösliche Dicarbonsäurederivate, beispielsweise Maleinsäureanhydrid eingesetzt wird. In solchen Fällen wird das Monomer (a) vorzugsweise zusammen mit einem Reaktionsinitiator über einen Zeitraum von bis zu mehreren Stunden, vorzugsweise weniger als 4 Stunden, bevorzugt innerhalb von etwa 2 Stunden zugegeben. Die Vollständigkeit der Polymerisation wird durch eine Nachreaktionsphase von bis zu einigen Stunden, vorzugsweise weniger als 4 Stunden, bevorzugt etwa 2 Stunden gewährleistet und kann zum Beispiel mittels kernmagnetischer Resonanzspektroskopie überprüft werden. In dieser Nachreaktionszeit kann die Vollständigkeit der Umsetzung in machen Fällen durch weitere Zugabe von Monomer (a) und gegebenenfalls Initiator erhöht werden.

In Abhängigkeit vom verwendeten Polymerisationsverfahren kann die Herstellung der erfindungsgemäßen Verbindungen, analog zum Stand der Technik, je nach Viskosität, in Substanz oder in Gegenwart von geeigneten Lösungsmitteln, Lösungsmittelgemischen oder anderen geigneten Trägermedien durchgeführt werden. Beispiele sind Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether, Ester wie Ethylacetat, Butylacetat, Butyrolacton, Phthalate oder andere Weichmacher, Di- oder Polycarbonsäureester, als "Dibasic Ester" bezeichnete Dialkylester von C₂₋₄-Dicarbonsäuren, Alkylglykolester wie Ethylglykolacetat, Methoxypropylacetat, Ketone wie Methylisobutylketon, Cyclohexanon, Aceton, aliphatische Alkohole wie Propylenglykol, Etheralkohole wie 2-Butoxyethanol, Diethylenglykolmonobutylether, Triethylenglykolmonobutylether, Propylenglykolmonomethylether, 2-Phenoxyethanol oder 2-(2-Phenoxyethoxy)ethanol, Polyether, Säureamide wie Dimethylformamid, N-Methylpyrrolidon usw. Zweckmäßig wählt man das oder die Lösemittel bzw. Trägermedien bereits unter Berücksichtigung des geplanten Einsatzgebietes aus.

Zum Beispiel werden für erfindungsgemäße Verbindungen für den Einsatz in wasserverdünnbaren Lacksystemen oder zur Belegung von Pigmenten in wäßriger Suspension nach der Pigmentsynthese zweckmäßig Lösemittel eingesetzt, die ganz oder teilweise wasserverdünnbar sind. Sollen die Produkte zum Beispiel dort eingesetzt werden, wo die Anwesenheit von VOC (volatile organic compounds) nicht erwünscht ist, sollte die Formulierung möglichst lösemittelfrei sein oder in entsprechend hochsiedenden Trägermedien erfolgen.

Je nach Anwendungsgebiet können die zur Synthese verwendeten Lösungsmittel im Reaktionsgemisch verbleiben oder werden ganz oder teilweise entfernt und gegebenenfalls durch andere Lösungsmittel oder Trägermedien ersetzt. Die erfindungsgemäßen Copolymere können je nach Verträglichkeit auch mit Harzen, Harzlösungen, Reaktivverdünnern, Bindemitteln oder mit anderen nach dem Stand der Technik bekannten Additiven kombiniert werden, wie zum Beispiel anderen Netz- und Dispergiermitteln, Antiabsetzmitteln, oberflächenaktiven Additiven wie z.B. Silikonen und dergleichen.

Das Lösungsmittel kann zum Beispiel durch Abdestillieren, gegebenenfalls bei reduziertem Druck und/oder azeotrop unter Zusatz von Wasser, ganz oder teilweise entfernt werden. Die Wirksubstanz kann aber auch durch Ausfällen durch Zusatz von Nichtlösern wie aliphatischen Kohlenwasserstoffen, beispielsweise Hexan, anschließendem Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösungsmittel angelöst werden oder gegebenenfalls in reiner Form z. B. bei Pulverlacken, eingesetzt werden. Gegebenenfalls kann das Lösungsmittel, in dem das Copolymer gelöst ist, nach Zusatz von geeigneten höher siedenden Lösungsmitteln, gegebenenfalls unter vermindertem Druck und/oder azeotrop unter Zusatz von Wasser, abdestilliert werden Auf diese Weise kann das Produkt in ein für das jeweilige Anwendungsgebiet geeignetes Trägermedium überführt werden.

Die zur Herstellung der erfindungsgemäßen Copolymerisate eingesetzten Monomere ermöglichen zudem in den meisten Fällen den Verzicht auf jegliche Lösungsmittel bei der Herstellung. Dies wiederum ist insbesondere dann vorteilhaft, wenn die Copolymerisate in lösemittelfreien oder wäßrigen Systemen eingesetzt werden sollen, da sich somit eine Abtrennung eines Polymerisationslösungsmittel erübrigt.

Die Copolymerisation wird vorzugsweise bei Temperaturen von 60 bis 220 °C, bevorzugt bei 100 bis 180 °C, besonders bevorzugt bei 120 bis 160 °C vorzugsweise in Gegenwart von üblicherweise verwendeten Radikale bildenden Initiatoren durchgeführt.

Radikalinitiatoren werden vorzugsweise aus der Gruppe der Peroxide, Hydroperoxide, Persulfate, Azoverbindungen und Redoxkatalysatoren, die eine oxidierende Komponente und eine reduzierende Komponente, wie z. B. Ascorbinsäure, Glucose, Hydrogensulfite, umfassen ausgewählt. Beispielsweise eignen sich 2,2-Azodi(isobutyronitril), 2,2-Azodi(2-methylbutyronitril), t-Butylpermaleinat, t-Butylperoxyisopropylcarbonat, t-Butylperbenzoat (TBPB), Dicumylperoxid, Di-t-amylperoxid, Cumolhydroperoxid, t-Butylhydroperoxid, Didodecanoylperoxid, Dibenzoylperoxid, Peressigsäure-tert-butylester, 2-Methylperpropionsäure-tert-butylester, insbesondere 2,5-Dimethyl-2,5-di(tertbutylperoxy)hexan und Di-t-Butylperoxid. Die Initiatoren werden zweckmäßig in einer Menge von 0,1 bis 10 Gew.-% , bevorzugt 0,2 bis 5 Gew.-% bezogen auf die eingesetzten Monomere, verwendet.

Die zahlenmittleren Molmassen der erfindungsgemäßen Copolymerisate liegen zwischen 1000 und 50000 g/mol, vorzugsweise zwischen 1500 und 25000 g/mol.

Die Molmassen und Molmassenverteilung lassen sich durch entsprechende Wahl der Reaktionsbedingungen, insbesondere von Initiatorart, Initiatormenge, Monomerverhältnissen und der Polymerisationstemperatur beeinflussen. In Einzelfällen kann die Mitverwendung üblicher Polymerisationsregler sinnvoll sein. Üblicherweise verwendet man kurzkettige Aldehyde, insbesondere schwefelhaltige Verbindungen wie Mercaptoessigsäure, Mercaptopropionsäure, n-Dodecylmercaptan, t-Dodecylmercaptan, Mercaptoethanol und Ester der Thioglycolsäure.

Die Regler können beispielsweise in einer Menge von 0,1 bis 5 Gew.-% eingesetzt werden.

Zur Durchführung der Polymerisation werden die vorgelegten Monomeren, gegebenenfalls unter Schutzgasatmosphäre, beispielsweise Stickstoff auf Reaktionstemperatur erhitzt. Der Radikalinitiator kann separat, gegebenenfalls gleichzeitig mit Monomer (a) zudosiert werden. Ebenso kann mit dem Regler verfahren werden.

Die so erhaltenen Copolymerisate können direkt als Dispergiermittel eingesetzt werden. Ihre Carboxyl- und/oder Anhydridgruppen können aber auch zur weiteren Steuerung der Netz- und Dispergiereigenschaften erst ganz oder teilweise amidiert und/oder verestert und/oder neutralisiert bzw. hydrolysiert werden.

Dazu wird das Copolymerisat vorteilhaft bei Temperaturen von 20 bis 250 °C, besonders bevorzugt bei 50 bis 200. °C, eventuell unter Druck, und gegebenenfalls in Gegenwart von geeigneten üblichen Katalysatoren, beispielsweise Sulfonsäuren wie p-Toluolsulfonsäure oder andere Alkylbenzolsulfonsäuren, metallorganischen Verbindungen wie Dibutylzinndilaurat oder Titantetraalkylate mit dem ausgewählten Alkohol, Amin und/oder Aminoalkohol versetzt. Die Reaktionen können in Substanz oder in einem geeigneten inerten Lösemittel erfolgen. Die Reaktionen verlaufen ähnlich schnell wie bei den monomeren Carbonsäureanhydriden und sind in der Regel nach 1 bis 6 Stunden beendet. Die bei teilweiser Solvolyse noch im Copolymerisat vorhandenen restlichen Anhydridgruppen können mit Wasser hydrolysiert werden und gegebenenfalls mit Alkalihydroxiden, Erdalkalihydroxiden, Ammoniaklösung und/oder Aminoalkoholen neutralisiert werden oder unreagiert im Copolymerisat verbleiben.

Sofern gewünscht kann die Hydrolyse gleichzeitig mit der nachfolgenden Neutralisation des Polymerisats vorgenommen werden. Dies gilt ebenfalls für Polymerisate, die nicht mit Alkoholen, Aminen und/oder Aminoalkoholen umgesetzt wurden.

Zur Amidbildung können Ammoniak sowie primäre und sekundäre Amine mit in der Regel 1 bis 50 Kohlenstoffatomen, vorzugsweise 2 bis 30 Kohlenstoffatomen eingesetzt werden. Geeignet sind beispielsweise gesättigte und ungesättigte aliphatische und cycloaliphatische Amine wie Methylamin, Ethylamin, n-Propylamin, Isopropylamin, n-Butylamin, Isobutylamin, Hexylamin, Cyclohexylamin, Methylcyclohexylamin, 2-Ethylhexylamin, n-Octylamin, Isotridecylamin, Talgfettamin, Stearylamin und Oleylamin sowie Dimethylamin, Diethylamin, Di-n-propylamin, Diisopropylamin, Di-n-butylamin, Diisobutylamin, Dihexylamin, Dicyclohexylamin, N-Methylcyclohexylamin, N,N-Bis(methylcyclohexyl)amin, Di-2-ethylhexylamin, Di-n-octylamin, Diisotridecylamin, Ditalgfettamin, Distearylamin und Dioleylamin; aromatische Amine wie Anilin, Naphthylamin, o-, m- und p-Toluidin und 2-Phenylethylamin sowie N-Ethyl-o-toluidin; Akanolamine wie Ethanolamin, n-Propanolamin, Aminomethylpropanol, Diethanolamin und Di-n-propanolamin; Ether- und Polyetheramine wie Morpholin, 4,9-Dioxadodecan-1,12-diamin, 4,7,10-Trioxatridecan-1,13-diamin, Bis-(3-aminopropyl)-polytetrahydrofuran und aminterminierte Polyoxyalkylenamine. (Handelsprodukte: Jeffamine der Firma Huntsman); Di- und Oligoamine wie Ethylendiamin, 1,3-Diaminopropan, Hexamethylendiamin, Dipropylendiamin und 3,3'-Dimethyl-4,4'-diaminophenylmethan sowie Diethyltriamin, Dipropyltriamin, Bishexamethylentriamin und N-Talgfett-1,3-diaminopropan; insbesondere aliphatische Diamine mit einer primären oder sekundären Aminogruppe und einer tertiären Aminogruppe, wobei der tertiäre Stickstoff auch Bestandteil eines heterocyclischen Ringes sein kann, wie z. B. 2-(Diethylamino)ethylamin, 3-(Diethylamino)propylamin, N,N-Diethyl-1,4-butandiamin, 1-Diethylamino-4-aminopentan, N-(3-Aminopropyl)morpholin, N-(2-Aminoethyl)piperidin, 1-Methylpiperazin und Aminoethylpiperazin, vorzugsweise 3-(Dimethylamino)propylamin und /oder N-(3-Aminopropyl)imidazol.

Die Veresterung der Carboxyl- oder Anhydridgruppen kann mit primären, sekundären und tertiären Alkoholen, die jeweils 1 bis 50 Kohlenstoffatome, vorzugsweise 4 bis 30 Kohlenstoffatome enthalten, erfolgen. Die Alkohole können geradkettig oder verzweigt, gesättigt oder ungesättigt sein. Beispiele für geeignete Alkohole sind aliphatische und cycloaliphatische Alkohole wie Methanol, Ethanol, n-Propanol, Isopropanol, n-Butanol, Isobutanol, Pentanol, Hexanol, Octanol, 2-Ethylhexanol, Nonanol, Decanol, Dodecanol, Tridecanol und deren Isomere, Cyclohexanol, Fettalkohole wie Talgfettalkohol, Stearylalkohol und Oleylalkohol, Oxoalkohole wie C9/11-Oxoalkohol und C13/15-Oxoalkohol; Ziegler-Alkohole mit 12 bis 24 C-Atomen, aromatische Alkohole wie Alkylphenole, Bisphenol A und ethoxilierte Alkylphenole; Di-, Oligo- und Polyole wie Ethylenglykol, 1,10-Decandiol, 2-Ethyl-2-hydroxymethylpropandiol-1,3, Glycerin, Pentaerythrit, Sorbit und Glukose; Etheralkohole und Polyetherdiole wie Ethylenglykolmonoethylether, Di- und Triethylenglykolmonoethylether, 2-Butoxyethanol, Di- und Triethylenglykolmonobutylether, Propylenglykolmonomethylether, 2-Phenoxyethanol oder 2-(2-Phenoxyethoxy)ethanol, Polytetrahydrofuran, Polyethylenglykole und Polypropylenglykole.

Zur Neutralisation der Säuregruppen können neben den oben genannten Alkalihydroxiden, Erdalkalihydroxiden, und Ammoniak, auch primäre, sekundäre oder tertiäre Amine und Aminoalkohole eingesetzt werden. Beispiele für gängige Basen sind unter anderem Calciumhydroxid, Magnesiumhydroxid, Butylamin, Dibutylamin, Triethylamin, N-Oleyl-1,3-propandiamin, Dimethylaminoethanol, Diethylaminoethanol, Aminomethylpropanol, 2-Dibutylaminoethanol, Mono-, Di- oder Polyaminalkoxilate, Monoethanolamin, Diethanolamin oder Triethanolamin, N,N-Bis[poly(oxyethylene)]-N-oleylamin; Natriumhydroxid und/oder Kaliumhydroxid bevorzugt in Form handelsüblicher 25 bis 50 gew.-%-iger Lauge oder Aminoalkoholen.

Der Neutralisationsgrad richtet sich nach der Hydrophilie des Copolymerisates und dessen Einsatzzweck. So müssen hydrophil eingestellte Polymerisate weniger weit neutralisiert werden als hydrophob eingestellte. In manchen Fällen ist es zweckmäßig, die Base im Überschuss einzusetzen, zum Beispiel beim Einsatz in stark basisch eingestellten Systemen. Ebenso ist der Neutralisationsgrad von der Art des Neutralisationsmittels abhängig. So muß bei Verwendung von Triethylamin ein höherer Neutralisationsgrad eingestellt werden als bei Verwendung von Kaliumhydroxid. Löslichkeit, Dispergierverhalten und Stabilität der fertigen Endprodukte hängen unter anderem von dem Neutralisationsgrad ab. Im allgemeinen ist ein Neutralisationsgrad von 0 bis 100% der im Copolymerisat nach vollständiger Hydrolyse der Anhydridgruppen vorhandenen Säuregruppen, insbesondere 50 bis 100 %, erwünscht. In vielen Fällen können die Copolymerisate aber auch unneutralisiert eingesetzt werden.

Die Neutralisation wird vorzugsweise bei Temperaturen von 40 bis 100 °C, bevorzugter 50 bis 70 °C durch Homogenisieren mit Wasser und Zugabe des Neutralisationsmittels ausgeführt. Höhere Temperaturen können in Druckreaktoren angewendet werden, wobei die Hydrolysebeständigkeit der eventuell vorhandenen Ester- und Amidgruppen berücksichtigt werden muß. Die im Copolymerisat vorhandenen Anhydridgruppen hydrolysieren während dieses Vorganges zu Carboxylgruppen und werden so bei der Neutralisation mit erfaßt. Der pH-Wert der gebrauchsfertigen Polymerdispersion liegt bei 4 bis 10, vorzugsweise bei 5 bis 8, besonders bevorzugt ist dieser 7 +/- 0,5.

Neben der Solvolyse bzw. Hydrolyse und/oder Neutralisation freier Carboxygruppen, lassen sich durch Wahl geeigneter Reaktionsbedingungen mit Ammoniak oder primären Aminen aus den Dicabonsäureanhydrideinheiten des Copolymerisats auch Imidstrukturen erzeugen. Diese imidfunktionalisierten Copolymerisate lassen sich analog zu den veresterten oder amidierten Copolymersiaten in eine wäßrige Dispersion oder Lösung überführen.

Durch Variation des Molekulargewichtes und von Art und Menge der eingesetzten Monomere (a) bis (d) kann die Wirksamkeit und Verträglichkeit der erfindungsgemäßen Verbindungen auf die unterschiedlichsten Lösemittel, Trägermedien, Bindemittel, Harze, Feststoffe und gegebenenfalls weitere polymere Verbindungen abgestimmt werden, welche in Überzugs und Formmassen vorliegen, in denen die Produkte gemäß der Erfindung zur Anwendung kommen.

Für den Einsatz in hochpolaren Systemen wie z. B. Wasserlacken und Elektrotauchlackierungen sollten die Copolymerisate einen ausreichend hohen Anteil an polaren Gruppen wie z.B. Polyethylenoxiden und/ oder Carboxylatgruppen enthalten, um eine für den jeweiligen Einsatzbereich günstige Wasserlöslichkeit zu erreichen. Dieser Anteil an hydrophilen Gruppen sollte aber auch nicht zu hoch sein, wenn es dadurch in bestimmten Anwendungen zu einer nicht gewünschten Erhöhung der Wasserempfindlichkeit kommt.

Beim Einsatz in unpolaren Systemen wie Langölalkydlacken, PVC-Plastisolen oder Polyolefinen sollte ein entsprechender Anteil an unpolaren Gruppen vorliegen und beim Einsatz in Systemen, bei denen eine breite Verträglichkeit wichtig ist, wie z. B. Pigmentkonzentraten, ist eine ausgewogene Kombination von polaren und unpolaren Gruppen von Vorteil.

Die erfindungsgemäßen Copolymerisate eignen sich hervorragend als Netz- und Dispergiermittel für Feststoffe insbesondere für wäßrige, lösemittelhaltige, oder lösemittelfreie Kunststoffmassen, Lacke, Druck- und Anstrichfarben, wie beispielsweise Polyvinylchlorid, Schreibtinten, Toner, Tintenstrahldruck-(Ink-Jet-)-Tinten, Pulverlacke oder UV-Lacke.

Der Einsatz der erfindungsgemäßen Dispergiermittel kann gemäß dem Stand der Technik für bekannte Dispergiermittel erfolgen, wobei anstelle der nach dem Stand der Technik bekannten Dispergiermittel diejenigen gemäß der Erfindung_eingesetzt werden. So können diese z.B. bei der Herstellung von Pigmente und/oder Füllstoffe enthaltenden Lacken, Druckfarben, Pasten, Pigmentkonzentraten und/oder Kunststoffmassen, wie beispielsweise Polyvinylchlorid, ungesättigte Polyester, Polyolefine, Polyurethane usw. eingesetzt werden. Beispielsweise lassen sich die Dispergiermittel zur Herstellung von pigmentierten Lacken, wobei Lackbindemittel z.B. Alkydharze, Polyesterharze, Acrylatharze, Polyurethanharze oder Epoxidharze und/oder Lösemittel, Pigmente und gegebenenfalls Füllstoffe, das Dispergiermittel und übliche Hilfsstoffe vermischt werden, verwenden. Beispiele für Beschichtungen auf Wasserbasis sind Dispersionsfarben, kathodische oder anodische Elektrotauchlackierungen zum Beispiel für Automobilkarosserien oder wäßrige 2-Komponentenlacke.

Die erfindungsgemäßen Dispergiermittel eignen sich insbesondere auch zur Herstellung von Feststoffkonzentraten, wie zum Beispiel Pigmentkonzentraten. Dazu werden die erfindungsgemäßen Verbindungen in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Diese Feststoffkonzentrate können dann in unterschiedliche Bindemittel eingearbeitet werden. Pigmente können aber auch lösemittelfrei direkt in den erfindungsgemäßen Dispergiermitteln dispergiert werden, und eignen sich dann besonders zur Pigmentierung von thermoplastischen und duroplastischen Kunststoffformulierungen.

Gegenstand der Erfindung ist letztlich auch die Verwendung eines derartigen Dispergiermittels zur Herstellung eines pigmentierten Überzuges auf einem Substrat, wobei der Pigmentlack auf das Substrat aufgebracht wird und wobei der auf das Substrat aufgebrachte Pigmentlack eingebrannt oder ausgehärtet bzw. vernetzt wird.

Die Dispergiermittel können alleine oder zusammen mit nach dem Stand der Technik üblichen Bindemitteln eingesetzt werden. Beim Einsatz in Polyolefinen kann es z.B. vorteilhaft sein, entsprechende niedermolekulare Polyolefine als Trägermaterialien, zusammen mit dem Dispergiermittel, einzusetzen.

Eine erfindungsgemäße Verwendung der Dispergiermittel besteht auch in der Herstellung dispergierbarer pulverpartikel- und/oder faserpartikelförmiger Feststoffe, insbesondere von dispergierbaren Pigmenten oder Kunststofffüllstoffen, wobei die Partikel mit dem Dispergiermittel beschichtet sind. Derartige Beschichtungen von organischen wie auch anorganischen Feststoffen werden in bekannter Weise ausgeführt, wie sie z.B. in EP-A-0 270 126 beschrieben werden. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen z.B. durch Zusatz der erfindungsgemäßen Dispergiermittel zur Pigmentsuspension oder während oder nach dem Pigmentfinish. Die auf diese Weise vorbehandelten Pigmente zeichnen sich durch leichtere Einarbeitbarkeit sowie durch verbessertes Viskositäts-, Flockulations- und Glanzverhalten und durch höhere Farbstärke, gegenüber nicht behandelten Pigmenten aus.

Neben der oben beschriebenen Anwendung als Dispergiermittel und/oder Beschichtungsmittel für pulver- und faserförmige Feststoffe können die erfindungsgemäßen Dispergiermittel auch als Viskositätsreduzierer und Kompatibilisatoren in Kunstharzen oder zur Verbesserung der Verträglichkeit von Mischungen unverträglicher Komponenten wie zum Beispiel Polymermischungen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in DE-A-36 43007 beschrieben.

Ein weiteres Beispiel sind unverträgliche Polyol-Mischungen, Poly-Isocyanat-Mischungen oder Polyol-Treibmittelmischungen die zur Polyurethan-Herstellung verwendet werden. Durch die erfindungsgemäßen Dispergiermittel können in vielen Fällen die aus dieser Unverträglichkeit resultierenden Separationsprobleme ganz oder teilweise vermieden werden.

Die erfindungsgemäßen Dispergiermittel werden im allgemeinen in einer Menge von 0,5 bis 100 Gew. %, bezogen auf den zu dispergierenden Feststoff, eingesetzt. Zur Dispergierung spezieller Feststoffe können aber auch höhere Mengen der Dispergiermittel notwendig sein.

Die Menge an Dispergiermittel ist im wesentlichen abhängig von der zu belegenden Oberfläche des zu dispergierenden Feststoffes. Ruß benötigt z.B. wesentlich größere Dispergiermittelmengen als z.B. TiO₂.

Beispiele für pulver- oder faserförmige Feststoffe sind solche, wie sie gemäß dem Stand der Technik mit Dispergiermitteln beschichtet wurden, insbesondere organische und anorganische Pigmente, die in Anstrichmitteln, Überzugsmitteln, Formmassen oder sonstigen Kunststoffen eingesetzt werden, und anorganische oder organische Füllstoffe, die zum Füllen oder Verstärken von Anstrichmitteln, Überzugsmittein, Formmassen oder sonstigen Kunststoffen eingesetzt werden. Eine Untergruppe von derartigen Füllstoffen sind Fasern organischer und/oder anorganischer Natur, die ebenfalls als Füllstoffe oder Verstärkungsstoffe verwendet werden.

Beispiele für Pigmente sind unter anderem Mono-, Di-, Tri- und Polyazopigmente, Oxazin-, Dioxazin-, Thiazin-Pigmente, Diketo-pyrrolo-pyrrole, Phthalocyanine und andere Metallkomplex-Pigmente, indigoide Pigmente, Diphenylmethan-, Triarylmethan, Xanthen-, Acridin-, Chinacridon-, Methin-Pigmente, Anthrachinon, Pyranthron-, Perylen- und andere polycyclische Carbonyl-Pigmente, anorganische Pigmente auf Basis von Ruß, Graphit, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden von Nickel, Titan, Zink, Mangan, Cobalt, Eisen, Chrom, Antimon, Magnesium, Aluminium (beispielsweise Nickeltitangelb oder Chromtitangelb), magnetischen Pigmenten auf Basis von Reineisen, Eisenoxiden und Chromoxiden oder Mischoxyden, Metalleffektpigmente wie Aluminiumbronzen Perlglanzpigmente, fluoreszierende und phosphoreszierende Leuchtpigmente.

Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126.

Des weiteren lassen sich auch mineralische Füllstoffe, wie beispielsweise Calciumcarbonat, Calciumoxid aber auch Flammschutzmittel wie z.B. Aluminium- oder Magnesiumhydroxid und Mattierungsmittel wie z.B. Kieselsäuren hervorragend dispergieren und stabilisieren.

Im folgenden werden die erfindungsgemäßen Copolymerisate anhand von Beispielen noch näher erläutert.

### BEISPIELE

### Herstellungsbeispiele

Soweit nicht anders angegeben, beziehen sich Angaben eines mittleren Molekulargewichts auf das zahlenmittlere Molekulargewicht Mₙ.

### Beispiel 1

Copolymer aus: 12 mol Maleinsäureanhydrid (MSA), 4,5 mol Tallölfettsäure, 4,5 mol konjugierte Sonnenblumenfettsäure und 3 mol Polyoxyethylenallylmethylether (mit einem mittleren MG (Molekulargewicht) von 450 g/mol)

Eine Mischung aus 40,6 g Tallölfettsäure (Equivalentgewicht (EG) = 289 g/mol), 39,5 g konjugierter Sonnenblumenfettsäure (EG = 281 g/mol), 36,7 g (0,3745 mol) MSA und 42,1 g (0,0936 mol) Polyoxyethylenallylmethylether wurde vorgelegt und unter Rühren auf 137 °C erhitzt. Innerhalb von 4 Stunden wurde eine Lösung von 4,24 g tert.-Butylperbenzoat (TBPB) in 53 g Dipropylenglykoldimethylether zugetropft. Nach beendeter Zugabe wurde noch 0,5 Stunden bei 137°C gerührt. Das erhaltene Produkt besitzt einen Festkörper (FK) von 75%.

### Beispiel 2

Umsetzungsprodukt zwischen dem Produkt aus Beispiel 1 und Jeffamin M 2070 (primäres Monoaminalkoxilat mit einem EO/PO- Verhältnis von 70/30 und einem mittleren MG von 2000; Fa. Huntsman)

91 g des Produkts aus Beispiel 1 werden mit 84 g Jeffamin M 2070 und 0,18 g p-Toluolsulfonsäure gemischt und 3 Stunden bei 170 °C gerührt. Anschließend wird ein Wasserabscheider montiert und 3 Stunden bei 170 °C das Reaktionswasser abdestilliert. Das erhaltene Produkt hat eine Aminzahl von <1 und eine Säurezahl von etwa 46.

### Beispiel 3

Umsetzungsprodukt zwischen dem Produkt aus Beispiel 1 und Benzylamin 108 g des Produkts aus Beispiel 1 werden mit 8 g Benzylamin und 0,12 g p-Toluolsulfonsäure gemischt und 3 Stunden bei 170 °C gerührt. Anschließend wird das Reaktionswasser innerhalb von 3 Stunden abdestilliert. Die Temperatur beträgt zu Beginn 170 °C und wird zum Ende der Destillation schrittweise auf 182°C erhöht. Das erhaltene Produkt besitzt einen FK von 100 %.

### Beispiel 4

Versalzungsprodukt zwischen dem Produkt aus Beispiel 3 und Diethylethanolamin

39 g des Produkts aus Beispiel 3 werden mit 142 g destilliertem Wasser homogenisiert. Anschließend werden bei Raumtemperatur langsam 5 g Diethylethanolamin zugegeben. Nach der Zugabe wird noch 5 Minuten bei 50 °C gerührt. Der pH-Wert der Mischung beträgt 7.

### Beispiel 5

Copolymer aus: 12 mol MSA, 4 mol Tallölfettsäure, 4 mol konjugierte Sonnenblumenfettsäure , 3 mol Polyoxyethylenallylmethylether (mit einem mittleren MG von 1100 g/mol) und 1 mol Polyoxypropylenmonoallylethermonoacetat (mit einem mittleren MG von 1600 g/mol)

Eine Mischung aus 24,8 g Tallölfettsäure (EG = 289), 24,1 g konjugierter Sonnenblumenfettsäure (EG = 281), 25,2 g (0,257 mol) MSA , 70,7 g (0,0643 mol) Polyoxyethylenallylmethylether und 36,2 g (0,0226mol) Polyoxypropylenmonoallylethermonoacetat wurde vorgelegt und unter Rühren auf 137 °C aufgeheizt. Innerhalb von 4 Stunden wurde eine Lösung von 4,83 g TBPB in 60 g Dipropylenglykoldimethylether zugetropft. Nach beendeter Zugabe wurde noch 0,5 Stunden bei 137 °C gerührt. Das erhaltene Produkt besitzt einen FK von 76%.

### Beispiel 6

Versalzungsprodukt zwischen dem Produkt aus Beispiel 5 und Diethylethanolamin

54 g des Produkts aus Beispiel 5 werden mit 31 g destilliertem Wasser homogenisiert. Anschließend werden bei Raumtemperatur langsam 7,8 g Diethylethanolamin zugegeben. Nach der Zugabe wird noch 5 Minuten bei 50 °C gerührt. Der pH-Wert der Mischung beträgt 7.

### Beispiel 7

Copolymer aus: 12 mol MSA, 4 mol Tallölfettsäure, 5 mol Polyoxyethylenallylmethylether (mit einem mittleren MG von 1100 g/mol) und 5 mol Polyoxypropylenmonoallylethermonoacetat (mit einem mittleren MG von 1600 g/mol)

Eine Mischung aus 7,2 g Tallölfettsäure (EG= 289), 14,7 g (0,15 mol) MSA , 68,9 g (0,0626 mol) Polyoxyethylenallylmethylether und 106 g (0,0663 mol) Polyoxypropylenmonoallylethermonoacetat wurde vorgelegt und unter Rühren auf 137 °C erhitzt. Innerhalb von 4 Stunden wurde eine Lösung von 5,25 g TBPB in 66g Dipropylenglykoldimethylether zugetropft. Nach beendeter Zugabe wurde noch 0,5 Stunden bei 137°C gerührt.

### Beispiel 8

Versalzungsprodukt zwischen dem Produkt aus Beispiel 7 und Diethylethanolamin

6,1 g Diethylethanolamin werden mit 41g destilliertem Wasser und 37,6 g Dipropylenglykoldimethylether homogenisiert. Anschließend werden bei 60°C langsam 79 g des Produkts aus Beispiel 7 zugegeben. Nach der Zugabe wird noch 15 Minuten bei 60 °C gerührt.

### Beispiel 9

Copolymer aus: 12 mol MSA, 8 mol Monophenylglykolester einer konjugierten Sonnenblumenfettsäure (mit einem mittleren Equivalentgewicht von 430 g/mol), 3 mol Polyoxyethylenallylmethylether (mit einem mittleren MG von 1100 g/mol) und 1 mol Polyoxypropylenmonoallylethermonoacetat (mit einem mittleren MG von 1600 g/mol)

Eine Mischung aus 80 g (0,1844 val) Monophenylglykolester, 27,1 g (0,2765 mol) MSA, 76 g (0,0692 mol) Polyoxyethylenallylmethylether und 39 g (0,0244 mol) Polyoxypropylenmonoallylethermonoacetat wurden vorgelegt und unter Rühren auf 137°C erhitzt. Innerhalb von 4 Stunden wurde eine Lösung von 5,92 g TBPB in 74 g Dipropylenglykoldimethylether langsam zugetropft. Nach beendeter Zugabe wurde noch 0,5 Stunden bei 137°C gerührt. Das erhaltene Produkt besitzt einen FK von 75%.

### Beispiel 10

### Versalzungsprodukt zwischen dem Produkt aus Beispiel 9 und Diethylethanolamin

6 g Diethylethanolamin werden mit 40 g destilliertem Wasser und 26,6 g Dipropylenglykoldimethylether homogenisiert. Anschließend werden bei 60 °C langsam 66 g des Produktes aus Beispiel 9 zugegeben. Nach der Zugabe wird noch 15 Minuten bei 60 °C gerührt.

### Beispiel 11

Versalzungsprodukt zwischen dem Produkt aus Beispiel 9 und Diethylethanolamin sowie einem ethoxilierten Oleylamin mit einem mittleren Equivalentgewicht von 770 g/mol

4,1 g Diethylethanolamin und 12,8 g Oleylaminethoxilat werden mit 0,6 g destilliertem Wasser und 41 g Butylglykol homogenisiert.-Anschließend werden bei 60 °C langsam 50 g des Produktes aus Beispiel 9 zugegeben. Nach der Zugabe wird noch 15 Minuten bei 60°C gerührt.

### Beispiel 12

Copolymer aus: 12 mol MSA, 6 mol konjugierte Sonnenblumenfettsäure, 6 mol Polyoxypropylenmonoallylethermonoacetat (mit einem mittleren MG von 2200 g/mol)

36 g konjugierte Sonnenblumenfettsäure (EG = 281), 50 g (0,5102 mol) MSA , 563 g (0,256mol) Polyoxypropylenmonoallylethermonoacetat wurden vorgelegt und unter Rühren auf 137°C erhitzt. Innerhalb von 2 Stunden wurden 10,7 g TBPB zugetropft. Nach beendeter Zugabe wurde noch 1 Stunden bei 137 °C gerührt.

### Beispiel 13

Versalzungsprodukt zwischen dem Produkt aus Beispiel 12 und Diethylethanolamin 19 g Diethylethanolamin werden mit 240 g destilliertem Wasser homogenisiert. Anschließend werden bei 60 °C langsam 143 g des Produkts aus Beispiel 12 zugegeben. Nach der Zugabe wird noch 30 Minuten bei 60 °C gerührt.

### Beispiel 14

Copolymer aus: 13,2 mol MSA, 1,5 mol Tallölfettsäure, 3 mol konjugierte Sonnenblumenfettsäure, 4 mol Polyoxyethylenallylmethylether (mit einem mittleren MG von 1100 g/mol), 1,5 mol Polyoxypropylenmonoallylethermonoacetat (mit einem mittleren MG von 1600 g/mol) und 2 mol Polyoxyethylenpolyoxypropylenallylmethylether (EO/PO: 70/30, Mn: 1850 g/mol)

Eine Mischung aus 8,7 g Tallölfettsäure (EG = 289), 16,9 g konjugierter Sonnenblumenfettsäure (EG = 281), 26 g (0,265 mol) MSA , 88,4 g (0,08 mol) Polyoxyethylenallylmethylether, 48,2g (0,03mol) Polyoxypropylenmonoallylethermonoacetat und 72,3 g (0,039 mol) Polyoxyethylenpolyoxypropylenallylmethylether wurde vorgelegt und unter Rühren auf 140°C erhitzt. Innerhalb von 4 Stunden wurden 4,9 g Di-tert.-butylperoxid zugetropft. Nach beendeter Zugabe wurde noch 0,5 Stunden bei 140 °C gerührt.

### Beispiel 15

Versalzungsprodukt zwischen dem Produkt aus Beispiel 14 und Diethylethanolamin

8 g Diethylethanolamin werden mit 114 g destillierten Wasser homogenisiert. Anschließend werden bei 60 °C langsam 68 g des Produktes aus Beispiel 14 zugegeben. Nach der Zugabe wird noch 30 Minuten bei 60°C gerührt.

### Beispiel 16

Umsetzungsprodukt zwischen dem Produkt aus Beispiel 1 und Dimethylaminopropylamin

11,3 g N,N- Dimethylaminopropylamin werden in 120 g Xylol gelöst und auf 120 °C erhitzt. Nun werden innerhalb von 20 Minuten 151 g des Produkts aus Beispiel 1 zugegeben. Nach einer Zugabe von 0,7 g 2,6-Di-tert-butyl-p-kresol wird die Mischung unter Rückfluß eine Stunde gerührt. Anschließend wird das Reaktionswasser bei ca. 144 °C entfernt. Das Xylol wird abdestilliert und durch die gleiche Menge Methoxypropylacetat ersetzt.

### Beispiel 17

Copolymer aus: 16 mol MSA, 2 mol Tallölfettsäure, 3 mol konjugierter Sonnenblumenfettsäure, 4 mol Polyoxyethylenallylmethylether (mit einem mittleren MG von 1100 g/mol), 1,5 mol Polyoxypropylenmonoallylethermonoacetat (mit einem mittleren MG von 1600 g/mol) und 2 mol Polyoxyethylenpolyoxypropylenallylmethylether (EO/PO: 70/30, Mn: 1850 g/mol)

Eine Mischung aus 10,7 g Tallölfettsäure (EG = 289), 15,6 g konjugierter Sonnenblumenfettsäure (EG = 281), 81,4 g Polyoxyethylenallylmethylether, 44,4 g Polyoxypropylenmonoallylethermonoacetat und 66,6g Polyoxyethylenpolyoxypropylenallylmethylether wurden vorgelegt und unter Rühren auf 140 °C erhitzt. Innerhalb von 4 Stunden wurden 3,7 g Di-tert.-butylperoxid kontinuierlich zudosiert und gleichzeitig 29 g MSA portionsweise zudosiert. Nach beendeter Zugabe wurde noch 0,5 Stunden bei 140 °C gerührt.

### Beispiel 18

### Produkt aus Beispiel 14 in Wasser angelöst.

116g destilliertes Wasser wurden vorgelegt und auf ca. 50°C erhitzt. Anschließend wurden langsam 79g des Produktes aus Beispiel 14 zugegeben. Nach der Zugabe wurde noch 30 Minuten bei 80°C gerührt. Das leicht trübe Produkt hat einen Festkörper (FK) von 40% und ist niedrig viskos.

### Anwendungsbeispiele

Zur Beurteilung der erfindungsgemäßen Verbindungen wurden wäßrige Pigmentkonzentrate auf Basis von 2 verschiedenen Pigmenten hergestellt. Nach 1 Tag Lagerung bei 20°C wurde deren Viskosität visuell bewertet: Je niedriger die Viskosität, um so besser ist das Dispergierergebnis. Die Angaben in den nachfolgenden Rezepturen sind in Gramm. Als nicht erfindungsgemäßes Vergleichsbeispiel wurde das Produkt nach Herstellungsbeispiel 1 der EP 1142972 A2 verwendet (Copolymer vom Maleinsäureanhydrid mit Methylpolyethylenglykolmonovinylether und Polypropylenglykol-bis-maleinamidsäure).

Zur Herstellung der Pigmentpasten werden die in den nachstehenden Tabellen angegebenen Bestandteile nacheinander in einen thermostatisierten Dispermatentopf eingewogen, mit der gleichen Menge 1 oder 2 mm Glasperlen versetzt und dann mit einer 40 mm Teflonscheibe bei 40° C dispergiert. Beim Titandioxid Tioxide TR-85 beträgt die Dispergierzeit 30 Minuten bei 18 m/s Umfangsgeschwindigkeit (8000 U/min) mit 2 mm Glasperlen und beim Phthalocyaninblau Heliogenblau L7101F 40 Minuten bei bei 23 m/s Umfangsgeschwindigkeit (10000 U/min) mit 1 mm Glasperlen. Der pH-Wert der Pigmentkonzentrate wurde mit AMP 90 (Aminomethylpropanol) auf 8,0 eingestellt.

Die dispergierten Pasten werden über ein Papiersieb (Maschenweite 80 µm) abgesiebt, und in Glasflaschen abgefüllt. Man erhält mit den erfindungsgemäßen Additionsverbindungen fließfähige Pigmentpasten mit sehr guten rheologischen Eigenschaften. Mit der nicht erfindungsgemäßen Vergleichsverbindung dagegen zeigte insbesondere die Blaupaste eine deutlich höhere Viskosität .

Delta E der Weißabmischungen wurde gemäß DIN 5033 mit dem Gerät "TCS" der Firma Byk-Gardner ermittelt.

**Pastenrezepturen: (Mengenangaben in Gewichtsteilen)**

| | Tioxide TR-85 | Heliogenblau L71 01 F |
|---|---|---|
| Wasser | 26,0 | 27,0 |
| Dispergiermittel nach Herstellungsbeispiel (40%ig)* | 9,3 | 16,3 |
| BYK®-011 | 1,0 | 1,0 |
| Proxel GXL | 0,1 | 0,1 |
| AMP 90 | 0,1 | 0,1 |
| Byk®-420 | 0,5 | 0,5 |
| Tioxide TR-85 | 63,0 | - |
| Heliogenblau L7101 F | - | 55,0 |

| | | |
|---|---|---|
| *: Produkte mit einem höheren Festkörpergehalt wurden mit Wasser ebenfalls auf 40% verdünnt, um die Vergleichbarkeit zu gewährleisten. | | |

Aus diesen Weiß- und Blaupasten wurden Weißabmischungen in einem wäßrigen 2 Komponenten Epoxysystem (Aradur 39 BD / Araldite PZ 756/67 BD, Fa Vantico) und in einem wäßrigen 2K-Polyurethan-Klarlack (Setalux-6511 AQ-47 / Bayhydur 3100, Desmodur VP LS 2150/1, Fa Bayer) hergestellt

**2K-EP-Klarlack:**

| | | | |
|---|---|---|---|
| Aradur 39 BD | 41,00 | | |
| demin. Wasser | 16,00 | | *Komponente A* |
| Dowanol PnB | 9,00 | | |
| BYK®-347 | 0,13 | (0,2% auf Komp.A) | |
| | 66,13 | | |
| | | | |

| | | | |
|---|---|---|---|
| Araldite PZ 756/67 BD | 34,00 | | *Komponente B* |
| | 100,13 | | |

Mischungsverhältnis Komp.A : Komp.B = 66 : 34
+ 30% demineralisiertes Wasser auf gesamt

**2K-PU-Klarlack:**

| | | |
|---|---|---|
| Setalux 6511 AQ-47 | 53,6 | |
| demin. Wasser | 10 | |
| Solvesso 100 (SN) | 1,3 | *Komponente A* |
| *BYK®-345* | 0,2 | |
| BYK®-333 | 0,2 | |
| | | |

| | | |
|---|---|---|
| Bayhydur3100 | 11 | |
| Desmodur VP LS 2150/1 | 20,4 | *Komponente B* |
| Butylacetat | 2,6 | |
| Butylglykolacetat | 1 | |
| | 100,3 | |

Mischungsverhältnis Komp.A : Komp.B = 65 : 35
+ 20% demin. Wasser auf gesamt

Zur Beurteilung der Flokkulationsstabilität wurden Rubout-Tests durchgeführt. Hierzu gießt man den Lack auf eine etwa 80° geneigte Glasplatte auf, läßt bis kurz vor dem Antrocknen ablüften und reibt mit dem Finger etwa 1/3 der Lackfläche bis zur Farbkonstanz aus. Nach Aushärtung des Films wird die Farbstärke-Differenz sowohl der ausgeriebenen als auch der nicht-ausgeriebenen Fläche als DeltaE-Wert bestimmt. Je kleiner der DeltaE-Wert, um so besser sind die Pigmente gegen Flokkulation und Entmischungserscheinungen stabilisiert.

Die in obigen Rezepturen angegebenen Handelsprodukte besitzen folgende chemische Charakteristik: Aradur 39 BD ist ein Aminhärter; Araldite PZ 756/67 BD ist eine Epoxidharzemulsion; Bayhydur 3100 ist ein Polyisocyanat auf HDI-Basis; Byk-011 ist ein silikonfreier Entschäumer auf Basis polymerer Substanzen und hydrophober Feststoffe; Byk®-333, Byk®-345 und Byk®-347 sind polyethermodifizierte Polysiloxane; Byk-420 ist ein Rheologieadditiv auf Basis eines modifizierten Harnstoffs; Desmodur VP LS 2150/1 ist ein Polyisocyanat auf IPDI-Basis; Dowanol PnB ist ein Propylenglykolbutylether; Proxel GXL ist ein Konservierungsmittel; Setalux 6511 AQ-47 ist ein hydroxyfuktionelles Polyacrylatharz; und Solvesso 100 (SN) ist Solventnaphtha.

### Abmischung des Klarlackes mit Weiß- und Bunt-Paste

Es wurde soviel Weißpaste zum Klarlack gegeben, daß die unten angegebenen Klarlack / Weißpasten - Mischungen 20% TiO₂ enthalten.

| | |
|---|---|
| Klarlack (Stammlack => Komp.A) | 28 |
| + Weiß-Paste | |
| Bunt-Paste | 2 |
| | 30 |

5 min. mit dem Skandexrüttler mischen

**Ergebnisse:** Weißabmischungen in **2K-EP**- und **2K-PU**- Systemen nach 1 Tag

| | **Aradur 39BD / Araldite PZ 756/67 BD** | | | |
|---|---|---|---|---|
| | **TR-85/L7101 F** | | | |
| | Glanz | | | |
| Dispergiermittel | 20° | Haze | DE | Aussehen |
| Beispiel 8 | 92 | 69 | 2,9 | OK |
| Beispiel 10 | 95 | 35 | 1,5 | OK |
| Beispiel 11 | 100 | 31 | 1,6 | OK |
| Beispiel 14 | 99 | 35 | 0,5 | OK |
| Beispiel 18 | 98 | 17 | 1,3 | OK |
| | | | | |
| Vergleichsbeispiel | 18 | 339 | 10 | 1 Stippen |

| | **Setalux 6511 AQ-47 / Bayhydur 3100/ Desmodur 2150/1** | | | |
|---|---|---|---|---|
| | **TR-85 / L 7101 F** | | | |
| | Glanz | | | |
| Dispergiermittel | 20° | Haze | DE | Aussehen |
| Beispiel 8 | 76 | 39 | 0,8 | OK |
| Beispiel 14 | 75 | 50 | 1,5 | OK |
| Beispiel 18 | 77 | 12 | 0,9 | OK |
| | | | | |
| Vergleichsbeispiel | 75 | 75 | 4,4 | Stippen |

Die mit dem nicht erfindungsgemäßen Vergleichsbeispiel hergestellten Weißabmischungen zeigen aufgrund ihrer Flokkulationsneigung das stärkste Ausschwimmen,einen niedrigen Glanz, hohe Haze-Werte und-Oberflächenstörungen in Form von Stippen aufgrund nicht ausreichend vermahlener Pigmentteilchen.

## Patentansprüche

1. Copolymerisate, erhältlich durch Copolymerisation der ungesättigten Bindungen von (a) 1 bis 80 mol-% mindestens eines ethylenisch ungesättigten 1,2-Dicarbonsäurederivats, (b) 2 bis 80 mol-% mindestens eines ungesättigten Monocarbonsäurederivats mit 12 bis 30 Kohlenstoffatomen, (c) 1 bis 90 mol-% mindestens eines Polyalkylenoxyallylethers mit einem zahlenmittleren Molekulargewicht von bis zu 5000 g/mol und (d) 0 bis 30 mol-% weiterer nicht unter (a), (b) oder (c) fallender, ungesättigter Monomere; sowie Umsetzungsprodukte der Copolymerisate mit Ammoniak, Aminen, Wasser, Alkoholen, Aminoalkoholen und/oder Alkali- oder Erdalkalihydroxiden.

2. Copolymerisate gemäß Anspruch 1, **dadurch gekennzeichnet, daß** diese durch Copolymerisation von (a) 20 bis 70 mol-% mindestens eines ethylenisch ungesättigten 1,2-Dicarbonsäurederivats, (b) 5 bis 60 mol-% mindestens eines ungesättigten Monocarbonsäurederivats mit 12 bis 30 Kohlenstoffatomen, (c) 5 bis 60 mol-% mindestens eines Polyalkylenoxyallylethers mit einem zahlenmittleren Molekulargewicht von bis zu 5000 g/mol und (d) 0 bis 15 mol-% weiterer ungesättigter Monomere erhältlich sind; sowie Umsetzungsprodukte der Copolymerisate mit Ammoniak, Aminen, Wasser, Alkoholen, Aminoalkoholen und/oder Alkali- oder Erdalkalihydroxiden.

3. Copolymerisate gemäß Anspruch 1 oder 2, **dadurch gekennzeichnet, daß** diese durch Copolymerisation von (a) 40 bis 65 mol-% mindestens eines ethylenisch ungesättigten 1,2-Dicarbonsäurederivats, (b) 10 bis 40 mol-% mindestens eines ungesättigten Monocarbonsäurederivats mit 12 bis 30 Kohlenstoffatomen, (c) 10 bis 40 mol-% mindestens eines Polyalkylenoxyallylethers mit einem zahlenmittleren Molekulargewicht von bis zu 5000 g/mol und (d) 0 bis 5 mol-% weiterer ungesättigter Monomere erhältlich sind; sowie Umsetzungsprodukte der Copolymerisate mit Ammoniak, Aminen, Wasser, Alkoholen, Aminoalkoholen und/oder Alkali- oder Erdalkalihydroxiden.

4. Copolymerisate gemäß einem der Ansprüche 1 bis 3, **dadurch gekennzeichnet, daß** das ethylenisch ungesättigte 1,2-Dicarbonsäurederivats, gewählt ist aus der Gruppe bestehend aus Anhydriden, Imiden, Halbestern, Diestern, Monoamiden und Diamiden ethylenisch ungesättigter 1,2-Dicarbonsäuren, sowie den ungesättigten 1,2-Dicarbonsäuren selbst.

5. Copolymerisate gemäß einem der Ansprüche 3 oder 4, **dadurch gekennzeichnet, daß** die ethylenisch ungesättigte 1,2-Dicarbonsäure oder die dem 1,2-Dicarbonsäurederivat zugrundeliegende 1,2-Dicarbonsäure gewählt ist aus der Gruppe bestehend aus Maleinsäure, Fumarsäure, Itaconsäure, Mesaconsäure und Citraconsäure.

6. Copolymerisate gemäß einem der Ansprüche 1 bis 4, **dadurch gekennzeichnet, daß** das ethylenisch ungesättigte 1,2-Dicarbonsäurederivat das Anhydrid der Maleinsäure ist.

7. Copolymerisate gemäß einem der Ansprüche 1 bis 6, **dadurch gekennzeichnet, daß** das ungesättigte Monocarbonsäurederivat 12 bis- 24 Kohlenstoffatome enthält.

8. Copolymerisate gemäß Anspruch 7, **dadurch gekennzeichnet, daß** das ungesättigte Monocarbonsäurederivat, eine ungesättigte Monocarbonsäure oder eine Mischung ungesättigter Monocarbonsäuren ist und gewählt wird aus der Gruppe bestehend aus Palmitölsäure, Ölsäure, Elaidinsäure, *cis*-Vaccensäure, Linolsäure, α- und γ-Linolensäure, Elaeostearinsäure, Di-*homo*-γ-Linolensäure, Arachidonsäure, Erucasäure, Nervonsäure, Sonnenblumenölfettsäure und Tallölfettsäure.

9. Copolymerisate gemäß einem oder mehreren der Ansprüche 1 bis 8, **dadurch gekennzeichnet, daß** der Polyalkylenoxyallylether folgende allgemeine Formel
CH₂=CH-CH₂-O-[AO]ₚ-R¹
besitzt, wobei AO für eine Alkylenoxy-Einheit mit 2 bis 10 Kohlenstoffatomen steht, R¹ für Wasserstoff, einen Alkylrest mit 1 bis 6 Kohlenstoffatomen oder einen Rest CO-R² steht, wobei R² ein Alkylrest mit 1 bis 6 Kohlenstoffatomen ist, und p so gewählt ist, daß das zahlenmittlere Molekulargewicht Mₙ des Polyalkylenoxyallylethers maximal 5000 g/mol beträgt.

10. Copolymerisate gemäß Anspruch 7, **dadurch gekennzeichnet, daß** der Polyalkylenoxyallylether folgende allgemeine Formel
CH₂=CH-CH₂-O-[EO]ₘ[PO]ₙ-R¹,
besitzt, wobei R¹ für einen Alkylrest mit 1 bis 6 Kohlenstoffatomen oder einen Rest CO-R² steht, wobei R² ein Alkylrest mit 1 bis 6 Kohlenstoffatomen ist, EO für eine Ethylenoxy-Gruppe steht, PO für eine Propylenoxy-Gruppe steht und die Summe aus m und n so gewählt werden, daß das zahlenmittlere Molekulargewicht Mₙ des Polyalkylenoxyallylethers maximal 5000 g/mol beträgt.

11. Copolymerisate gemäß einem der Ansprüche 1 bis 10, **dadurch gekennzeichnet, daß** weitere ungesättigte Monomer (d) gewählt wird-aus der Gruppe bestehend aus Acrylsäureestern, Methacrylsäureestern, Styrol, α-Methylstyrol, Vinyltoluol, Vinylcyclohexan, Vinylestern, Alkylvinylethern und/oder Vinylpolyethern.

12. Verfahren zur Herstellung eines Copolymerisats gemäß einem der Ansprüche 1 bis 11, **dadurch gekennzeichnet, daß** (a) 1 bis 80 mol-% mindestens eines ethylenisch ungesättigten 1,2-Dicarbonsäurederivats, (b) 2 bis 80 mol-% mindestens eines ungesättigten Monocarbonsäurederivats mit 12 bis 30 Kohlenstoffatomen, (c) 1 bis 90 mol-% mindestens eines Polyalkylenoxyallylethers mit einem zahlenmittleren Molekulargewicht von bis zu 5000 g/mol und (d) 0 bis 30 mol-% eines weiteren, nicht unter (a), (b) oder (c) fallenden, ungesättigten Monomers copolymerisiert werden und das resultierende Produkt gegebenenfalls mit einer oder mehreren Verbindungen aus der Gruppe bestehend aus Ammoniak, Aminen, Wasser, Alkoholen, Aminoalkoholen, Alkalihydroxiden und Erdalkalihydroxiden umgesetzt wird.

13. Verfahren gemäß Anspruch 12, **dadurch gekennzeichnet, daß** die unter (b), (c) und gegebenenfalls (d) geführten Komponenten vorgelegt werden und dann die Komponente unter (a), gegebenenfalls gleichzeitig mit einem Katalysator, zudosiert wird.

14. Verwendung der Copolymerisate aus einem der Ansprüche 1 bis 11 oder erhältlich nach einem der Verfahren gemäß den Ansprüchen 12 und 13 als Netzmittel und/oder Dispergiermittel, insbesondere in Überzugsmitteln, Pasten und Kunststoffmassen.

15. Verwendung gemäß Anspruch 14, wobei das Copolymerisat zur Dispergierung von pulverpartikelförmigen oder faserpartikelförmigen Feststoffen dient.

16. Verwendung gemäß Anspruch 15, wobei die Feststoffe ganz oder teilweise mit dem Copolymerisat beschichtet sind.

17. Zusammensetzung enthaltend ein oder mehrere Copolymerisate gemäß einem der Ansprüche 1 bis 11.

18. Zusammensetzung gemäß Anspruch 17, wobei die Zusammensetzung ein Überzugsmittel, eine Paste oder eine Formmasse ist.

## Claims

1. Copolymers obtainable by copolymerizing the unsaturated bonder of (a) 1 to 80 mol% of at least one ethylenically unsaturated 1,2-dicarboxylic acid derivative, (b) 2 to 80 mol% of at least one unsaturated monocarboxylic acid derivative having 12 to 30 carbon atoms, (c) 1 to 90 mol% of at least one polyalkyleneoxyallyl ether having a number-average molecular weight of up to 5000 g/mol and (d) 0 to 30 mol% of further, unsaturated monomers, not coming under (a), (b) or (c); and also reaction products of the copolymers with ammonia, amines, water, alcohols, amino alcohols and/or alkali metal hydroxides or alkaline earth metal hydroxides.

2. Copolymers according to Claim 1, **characterized in that** they are obtainable by copolymerizing (a) 20 to 70 mol% of at least one ethylenically unsaturated 1,2-dicarboxylic acid derivative, (b) 5 to 60 mol% of at least one unsaturated monocarboxylic acid derivative having 12 to 30 carbon atoms, (c) 5 to 60 mol% of at least one polyalkyleneoxyallyl ether having a number-average molecular weight of up to 5000 g/mol and (d) 0 to 15 mol% of further, unsaturated monomers; and also reaction products of the copolymers with ammonia, amines, water, alcohols, amino alcohols and/or alkali metal hydroxides or alkaline earth metal hydroxides.

3. Copolymers according to Claim 1 or 2, **characterized in that** they are obtainable by copolymerizing (a) 40 to 65 mol% of at least one ethylenically unsaturated 1,2-dicarboxylic acid derivative, (b) 10 to 40 mol% of at least one unsaturated monocarboxylic acid derivative having 12 to 30 carbon atoms, (c) 10 to 40 mol% of at least one polyalkyleneoxyallyl ether having a number-average molecular weight of up to 5000 g/mol and (d) 0 to 5 mol% of further, unsaturated monomers; and also reaction products of the copolymers with ammonia, amines, water, alcohols, amino alcohols and/or alkali metal hydroxides or alkaline earth metal hydroxides.

4. Copolymers according to any one of Claims 1 to 3, **characterized in that** the ethylenically unsaturated 1,2-dicarboxylic acid derivative is selected from the group consisting of anhydrides, imides, monoesters, diesters, monoamides and diamides of ethylenically unsaturated 1,2-dicarboxylic acids and also the unsaturated 1,2-dicarboxylic acids themselves.

5. Copolymers according to either of Claims 3 and 4, **characterized in that** the ethylenically unsaturated 1,2-dicarboxylic acid or the 1,2-dicarboxylic acid on which the 1,2-dicarboxylic acid derivative is based is selected from the group consisting of maleic acid, fumaric acid, itaconic acid, mesaconic acid and citraconic acid.

6. Copolymers according to any one of Claims 1 to 4, **characterized in that** the ethylenically unsaturated 1,2-dicarboxylic acid derivative is the anhydride of maleic acid.

7. Copolymers according to any one of Claims 1 to 6, **characterized in that** the unsaturated monocarboxylic acid derivative contains 12 to 24 carbon atoms.

8. Copolymers according to Claim 7, **characterized in that** the unsaturated monocarboxylic acid derivative is an unsaturated monocarboxylic acid or a mixture of unsaturated monocarboxylic acids and is selected from the group consisting of palmitoleic acid, oleic acid, elaidic acid, *cis-*vaccenic acid, linoleic acid, α- and γ-linolenic acid, elaeostearic acid, di-*homo*-γ-linolenic acid, arachidonic acid, erucic acid, nervonic acid, sunflower oil fatty acid and tall oil fatty acid.

9. Copolymers according to one or more of Claims 1 to 8, **characterized in that** the polyalkyleneoxyallyl ether possesses the following general formula:
CH₂=CH-CH₂-O-[AO]ₚ-R¹
where AO is an alkyleneoxy unit having 2 to 10 carbon atoms, R¹ is hydrogen, an alkyl radical having 1 to 6 carbon atoms or a radical CO-R², where R² is an alkyl radical having 1 to 6 carbon atoms, and p is chosen such that the number-average molecular weight Mₙ of the polyalkyleneoxyallyl ether is not more than 5000 g/mol.

10. Copolymers according to Claim 7, **characterized in that** the polyalkyleneoxyallyl ether possesses the following general formula:
CH₂=CH-CH₂-O-[EO]ₘ[PO]ₙ-R¹
where R¹ is an alkyl radical having 1 to 6 carbon atoms or a radical CO-R², where R² is an alkyl radical having 1 to 6 carbon atoms, EO is an ethyleneoxy group, PO is a propyleneoxy group and the sum of m and n is chosen such that the number-average molecular weight Mₙ of the polyalkyleneoxyallyl ether is not more than 5000 g/mol.

11. Copolymers according to any one of Claims 1 to 10, **characterized in that** further unsaturated monomer (d) is selected from the group consisting of acrylic esters, methacrylic esters, styrene, α-methylstyrene, vinyltoluene, vinylcyclohexane, vinyl esters, alkyl vinyl ethers and/or vinyl polyethers.

12. Process for preparing a copolymer according to any one of Claims 1 to 11, **characterized in that** (a) 1 to 80 mol% of at least one ethylenically unsaturated 1,2-dicarboxylic acid derivative, (b) 2 to 80 mol% of at least one unsaturated monocarboxylic acid derivative having 12 to 30 carbon atoms, (c) 1 to 90 mol% of at least one polyalkyleneoxyallyl ether having a number-average molecular weight of up to 5000 g/mol and (d) 0 to 30 mol% of a further, unsaturated monomer, not coming under (a), (b) or (c), are copolymerized and the resulting product is, where appropriate, reacted with one or more compounds from the group consisting of ammonia, amines, water, alcohols, amino alcohols, alkali metal hydroxides and alkaline earth metal hydroxides.

13. Process according to Claim 12, **characterized in that** the components set out under (b), (c) and, where appropriate, (d) are introduced as an initial charge and then the component under (a) is metered in, simultaneously with a catalyst if desired.

14. Use of the copolymers of any one of Claims 1 to 11 or obtainable according to one of the processes according to Claims 12 and 13 as wetting agents and/or dispersants, in particular in coating materials, pastes and polymeric compositions.

15. Use according to Claim 14, wherein the copolymer serves for dispersing solids in the form of powder particles or fibre particles.

16. Use according to Claim 15, wherein the solids are wholly or partly coated with the copolymer.

17. Composition comprising one or more copolymers according to any one of Claims 1 to 11.

18. Composition according to Claim 17, wherein the composition is a coating material, a paste or a moulding compound.

## Revendications

1. Copolymères pouvant être obtenus par copolymérisation des liaisons insaturées de (a) 1 à 80 % en mole d'au moins un dérivé d'acide 1,2-dicarboxylique à insaturations éthyléniques, (b) 2 à 80 % en mole d'au moins un dérivé d'acide monocarboxylique insaturé avec 12 à 30 atomes de carbone, (c) 1 à 90% en mole d'au moins un éther polyalkylénoxyallique avec un poids moléculaire moyen en nombre allant jusqu'à 5000 g/mol et (d) 0 à 30 % en mole d'autres mon mères insaturés, n'entrant pas dans les catégories (a), (b) ou (c), ainsi que des produits de réaction des copolymères avec de l'ammoniac, des amines, de l'eau, des alcools, des amino-alcools et/ou des hydroxydes alcalins ou alcalino-terreux.

2. Copolymères selon la revendication 1, **caractérisés en ce que** ceux-ci peuvent être obtenus par copolymérisation de (a) 20 à 70 % en mole d'au moins un dérivé d'acide 1,2-dicarboxylique à insaturations éthyléniques, (b) 5 à 60 % en mole d'au moins un dérivé d'acide monocarboxylique insaturé avec 12 à 30 atomes de carbone, (c) 5 à 60 % en mole d'au moins un éther polyalkylénoxyallylique avec un poids moléculaire moyen en nombre allant jusqu'à 5000 g/mol et (d) 0 à 15 % en mole d'autres monomères insaturés, ainsi que des produits de réaction des copolymères avec de l'ammoniac, des amines, de l'eau, des alcools, des amino-alcools et/ou des hydroxydes alcalins ou alcalino-terreux.

3. Copolymères selon la revendication 1 ou 2, **caractérisés en ce que** ceux-ci peuvent être obtenus par copolymérisation de (a) 40 à 65 % en mole d'au moins un dérivé d'acide 1,2-dicarboxylique à insaturations éthyléniques, (b) 10 à 40 % en mole d'au moins un dérivé d'acide monocarboxylique insaturé avec 12 à 30 atomes de carbone, (c) 10 à 40 % en mole d'au moins un éther polyalkylénoxyallylique avec un poids moléculaire moyen en nombre allant jusqu'à 5000 g/mol et (d) 0 à 5 % en mole d'autres monomères insaturés, ainsi que des produits de réaction des copolymères avec de l'ammoniac, des amines, de l'eau, des alcools, des amino-alcools et/ou des hydroxydes alcalins ou alcalino-terreux.

4. Copolymères selon l'une quelconque des revendications 1 à 3, **caractérisés en ce que** le dérivé d'acide 1,2-dicarboxylique à insaturations éthyléniques est choisi parmi le groupe constitué d'anhydrides, d'imides, d'hémiesters, de di-esters, de mono-amides et de di-amides d'acides 1,2-dicarboxyliques à insaturations éthyléniques ainsi que des acides 1,2-dicarboxyliques insaturés eux-mêmes.

5. Copolymères selon l'une quelconque des revendications 3 ou 4, **caractérisés en ce que** l'acide 1,2-dicarboxylique à insaturations éthyléniques ou l'acide 1,2-dicarboxylique à la base du dérivé d'acide 1,2-dicarboxylique est choisi parmi le groupe constitué de l'acide maléique, l'acide fumarique, l'acide itaconique, l'acide mésaconique et l'acide citraconique.

6. Copolymères selon l'une quelconque des revendications 1 à 4, **caractérisés en ce que** le dérivé d'acide 1,2-dicarboxylique à insaturations éthyléniques est l'anhydride de l'acide maléique.

7. Copolymères selon l'une quelconque des revendications 1 à 6, **caractérisés en ce que** le dérivé d'acide monocarboxylique insaturé contient 12 à 24 atomes de carbone.

8. Copolymères selon la revendication 7, **caractérisés en ce que** le dérivé d'acide monocarboxylique insaturé est un acide monocarboxylique insaturé ou un mélange d'acides monocarboxyliques insaturés et est choisi parmi le groupe constitué de l'acide palmique, l'acide oléique, l'acide élaïdique, l'acide *cis*-vaccénique, l'acide linolique, l'acide α- et γ-linolénique, l'acide élaéostéarique, l'acide di-*homo-*γ-linolénique, l'acide arachidonique, l'acide érucique, l'acide nervonique, l'acide gras d'huile de tournesol et l'acide gras de tallol.

9. Copolymères selon l'une quelconque ou plusieurs des revendications 1 à 8, **caractérisés en ce que** l'éther polyalkylénoxyallylique possède la formule générale suivante :
CH₂=CH-CH₂-O-[AO]ₚ-R¹
dans laquelle AO représente un groupe alkylénoxy avec 2 à 10 atomes de carbone, R¹ représente hydrogène, un radical alkyle avec 1 à 6 atomes de carbone ou un radical COR², R² étant un radical alkyle avec 1 à 6 atomes de carbone, et p étant choisi de sorte que le poids moléculaire moyen en nombre Mₙ de l'éther polyalkylénoxyallylique se monte au maximum à 5000 g/mol.

10. Copolymères selon la revendication 7, **caractérisés en ce que** l'éther polyalkylénoxyallylique possède la formule générale suivante :
CH₂=CH-CH₂-O-[EO]ₘ[PO]ₙ-R¹,
dans laquelle R¹ représente un radical alkyle avec 1 à 6 atomes de carbone ou un radical CO-R², R² étant un radical alkyle avec 1 à 6 atomes de carbone, EO représente un groupe éthylénoxy, PO représente un groupe propylénoxy et la somme de m et n étant choisie de sorte que le poids moléculaire moyen en nombre Mₙ de l'éther polyalkylénoxyallylique se monte au maximum à 5000 g/mol.

11. Copolymères selon l'une quelconque des revendications 1 à 10, **caractérisés en ce que** l'autre monomère insaturé (d) est choisi parmi le groupe constitué d'esters de l'acide acrylique, d'esters de l'acide méthacrylique, du styrène, de l'α-méthylstyrène, du vinyltoluène, du vinylcyclohexane, d'esters vinyliques, d'éthers alkylvinyliques et/ou de polyéthers vinyliques.

12. Procédé de préparation d'un copolymère selon l'une quelconque des revendications 1 à 11, **caractérisé en ce que** (a) 1 à 80 % en mole d'au moins un dérivé d'acide 1,2-dicarboxylique à insaturations éthyléniques, (b) 2 à 80 % en mole d'au moins un dérivé d'acide monocarboxylique insaturé avec 12 à 30 atomes de carbone, (c) 1 à 90 % en mole d'au moins un éther polyalkylénoxyallylique avec un poids moléculaire moyen en nombre allant jusqu'à 5000 g/mol et (d) 0 à 30 % en mole d'un autre monomère insaturé, n'entrant pas dans les catégories (a), (b) ou (c) sont copolymérisés, et **en ce que** le produit résultant est éventuellement mis à réagir avec un ou plusieurs composés du groupe constitué de l'ammoniac, d'amines, de l'eau, d'alcools, d'amino-alcools, d'hydroxydes alcalins et d'hydroxydes alcalino-terreux.

13. Procédé selon la revendication 12, **caractérisé en ce que** les composants cités en (b), (c) et éventuellement (d) sont préparés, puis le composant en (a) est ajouté de manière dosée, éventuellement en même temps qu'un catalyseur.

14. Utilisation des copolymères selon l'une quelconque des revendications 1 à 11 ou pouvant être obtenus selon un des procédés selon les revendications 12 et 13 comme agent mouillant et/ou dispersant, notamment dans des agents de revêtement, pâtes et masses plastiques.

15. Utilisation selon la revendication 14, dans laquelle le copolymère sert à la dispersion de solides sous forme de particules pulvérulentes ou sous forme de particules fibreuses.

16. Utilisation selon la revendication 15, dans laquelle les solides sont enduits entièrement ou partiellement du copolymère.

17. Composition contenant un ou plusieurs copolymères selon l'une quelconque des revendications 1 à 11.

18. Composition selon la revendication 17, dans laquelle la composition est un agent de revêtement, une pâte ou une masse à mouler.
